# EUROPEAN PATENT APPLICATION

(11) **EP 4 506 673 A1**
(43) Date of publication of application: **12.02.2025**
(21) Application number: 24192156.8
(22) Date of filing: 31.07.2024
(51) Int. Cl.: G01M 11/00

(54) **OPTICAL FIBER CHARACTERISTICS MEASUREMENT APPARATUS**

(30) Priority: 09.08.2023 JP 2023130391
(71) Applicant: Yokogawa Electric Corporation, Tokyo 180-8750 (JP)
(72) Inventor: Suzuki, Yuta, Musashino-shi, 180-8750 (JP); Tezuka, Shin-ichirou, Musashino-shi, 180-8750 (JP); Honma, Masayoshi, Musashino-shi, 180-8750 (JP)
(74) Representative: Zimmermann, Tankred Klaus

(57) **Abstract**

An optical fiber characteristics measurement apparatus (10) according to the present disclosure measures the characteristics of an optical fiber. The optical fiber characteristics measurement apparatus (10) includes a laser light source module (11) that outputs frequency-modulated laser light. The laser light source module (11) includes a laser light source (110) that outputs laser light, a laser light source driver (111) that modulates the frequency of the laser light outputted by the laser light source (110), and an optical amplifier (116) that adjusts the amplitude of the frequency-modulated laser light outputted by the laser light source (110) so as to cancel an amplitude modulation occurring in the frequency-modulated laser light outputted by the laser light source (110).

## Description

### CROSS-REFERENCE TO RELATED APPLICATION

The present application claims priority to Japanese Patent Application No. 2023-130391 filed on August 9, 2023, the entire contents of which are incorporated herein by reference.

### TECHNICAL FIELD

The present disclosure relates to an optical fiber characteristics measurement apparatus.

### BACKGROUND

Optical fiber characteristics measurement apparatuses that measure the characteristics of optical fibers using Brillouin Optical Correlation Domain Reflectometry (BOCDR) are known.

The BOCDR optical fiber characteristics measurement apparatus can measure the temperature and strain at each position of an optical fiber by measuring the scattered light due to Brillouin scattering and measuring the Brillouin Frequency Shift (BFS).

For example, Patent Literature (PTL) 1 discloses an optical fiber characteristics measurement apparatus that can reduce the time required to measure the characteristics of optical fibers as a BOCDR optical fiber characteristics measurement apparatus.

### CITATION LIST

### Patent Literature

PTL 1: JP 6773091 B2

### SUMMARY

Optical fiber characteristics measurement apparatuses typically cause frequency-modulated laser light to be incident on the optical fiber that is the measurement target.

When the laser light is frequency modulated, the laser light is also unintentionally subjected to amplitude modulation as a result. This amplitude modulation becomes noise, which is an obstacle in improving the measurement accuracy of the optical fiber characteristics measurement apparatus.

It would be helpful to provide an optical fiber characteristics measurement apparatus that can improve measurement accuracy.

An optical fiber characteristics measurement apparatus according to several embodiments is an optical fiber characteristics measurement apparatus for measuring characteristics of an optical fiber and includes a laser light source module configured to output frequency-modulated laser light, wherein the laser light source module includes a laser light source configured to output laser light, a laser light source driver configured to modulate a frequency of the laser light outputted by the laser light source, and an optical amplifier configured to adjust an amplitude of the frequency-modulated laser light outputted by the laser light source so as to cancel an amplitude modulation occurring in the frequency-modulated laser light outputted by the laser light source. According to such an optical fiber characteristics measurement apparatus, measurement accuracy can be improved.

In the optical fiber characteristics measurement apparatus according to an embodiment, the laser light source module may further include a signal generator configured to generate a first sine wave used when the laser light source driver modulates the frequency of the laser light outputted by the laser light source and a second sine wave having a frequency equal to a frequency of the first sine wave, a phase shifter configured to delay a phase of the second sine wave according to the frequency of the first sine wave, and an optical amplifier driver configured to drive the optical amplifier with the second sine wave delayed by the phase shifter to adjust an amplitude of the frequency-modulated laser light outputted by the laser light source. This configuration enables the optical fiber characteristics measurement apparatus accurately to cancel the amplitude modulation that unintentionally occurs during frequency modulation.

In the optical fiber characteristics measurement apparatus according to an embodiment, the laser light source module may further include a variable amplifier configured to amplify an amplitude of the second sine wave according to an amplitude of the first sine wave and output the second sine wave to the phase shifter. This configuration enables the optical fiber characteristics measurement apparatus accurately to cancel the amplitude modulation that unintentionally occurs during frequency modulation.

In the optical fiber characteristics measurement apparatus according to an embodiment, the laser light source module may further include a first signal generator configured to generate a first sine wave used when the laser light source driver modulates the frequency of the laser light outputted by the laser light source, a second signal generator configured to generate a second sine wave that has a frequency equal to a frequency of the first sine wave and is delayed according to the frequency of the first sine wave, and an optical amplifier driver configured to drive the optical amplifier with the second sine wave to adjust an amplitude of the frequency-modulated laser light outputted by the laser light source. This configuration enables the optical fiber characteristics measurement apparatus accurately to cancel the amplitude modulation that unintentionally occurs during frequency modulation.

In an optical fiber characteristics measurement apparatus according to an embodiment, an amplitude of the second sine wave generated by the second signal generator may be amplified according to an amplitude of the first sine wave. This configuration enables the optical fiber characteristics measurement apparatus accurately to cancel the amplitude modulation that unintentionally occurs during frequency modulation.

In an optical fiber characteristics measurement apparatus according to an embodiment, the optical fiber characteristics measurement apparatus may be configured to measure the characteristics of the optical fiber using Brillouin optical correlation domain reflectometry, and the optical fiber characteristics measurement apparatus may further include a first optical coupler configured to split the frequency-modulated laser light into a pump light and a reference light, and a second optical coupler configured to combine scattered light from the optical fiber with the reference light, the scattered light being generated upon the pump light being incident on the optical fiber that is a measurement target.

In an optical fiber characteristics measurement apparatus according to an embodiment, the optical fiber characteristics measurement apparatus may be configured to measure the characteristics of the optical fiber using Brillouin optical correlation domain analysis, and the optical fiber characteristics measurement apparatus may further include a first optical coupler configured to split the frequency-modulated laser light into a pump light and a probe light, and a circulator configured to extract scattered light and the probe light from the optical fiber, the scattered light being generated upon the pump light being incident on the optical fiber that is a measurement target.

According to the present disclosure, an optical fiber characteristics measurement apparatus that can improve measurement accuracy can be provided.

### BRIEF DESCRIPTION OF THE DRAWINGS

In the accompanying drawings:
FIG. 1 is a diagram illustrating a schematic configuration of an optical fiber characteristics measurement apparatus according to an embodiment;
FIG. 2 is a diagram illustrating a schematic configuration of an optical fiber characteristics measurement apparatus according to a variation;
FIG. 3 is a diagram illustrating a schematic configuration of an optical fiber characteristics measurement apparatus according to a comparative example; and
FIG. 4 is a diagram illustrating a schematic configuration of a BOCDA optical fiber characteristics measurement apparatus.

### DETAILED DESCRIPTION

An embodiment of the present disclosure is now described with reference to the drawings.

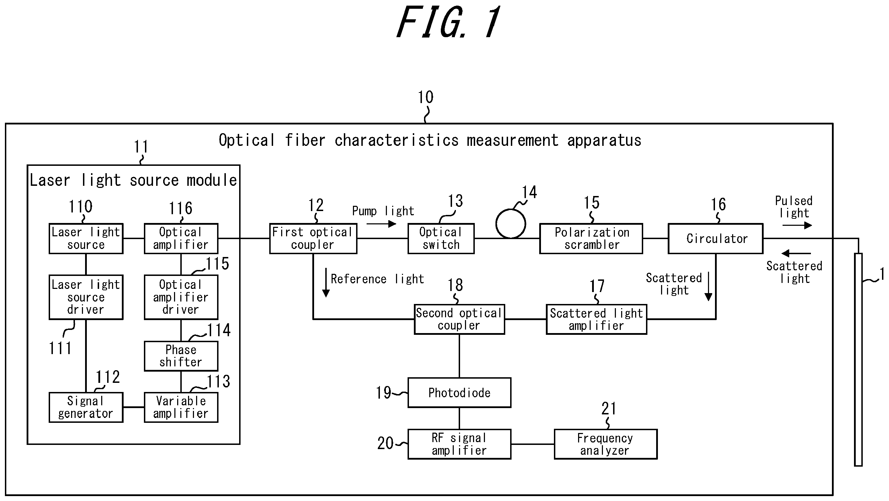

FIG. 1 is a diagram illustrating a schematic configuration of an optical fiber characteristics measurement apparatus 10 according to an embodiment. The optical fiber characteristics measurement apparatus 10 is an apparatus that measures the characteristics of an optical fiber 1, which is a measurement target, using Brillouin Optical Correlation Domain Reflectometry (BOCDR).

The optical fiber characteristics measurement apparatus 10 includes a laser light source module 11, a first optical coupler 12, an optical switch 13, a delay fiber 14, a polarization scrambler 15, a circulator 16, a scattered light amplifier 17, a second optical coupler 18, a photodiode 19, a Radio Frequency (RF) signal amplifier 20, and a frequency analyzer 21.

The laser light source module 11 outputs frequency-modulated laser light to the first optical coupler 12.

The laser light source module 11 includes a laser light source 110, a laser light source driver 111, a signal generator 112, a variable amplifier 113, a phase shifter 114, an optical amplifier driver 115, and an optical amplifier 116.

The laser light source 110 outputs laser light to the optical amplifier 116. The laser light source 110 can, for example, be a laser diode. The laser light source 110 can output frequency-modulated laser light. The laser light outputted by the laser light source 110 is frequency modulated by the laser light source driver 111.

The laser light source driver 111 modulates the frequency of the laser light outputted by the laser light source 110. The laser light source driver 111 can modulate the frequency of the laser light outputted by the laser light source 110 by controlling the current flowing to the laser light source 110.

The laser light source driver 111 modulates the frequency of the laser light, outputted by the laser light source 110, using a sine wave supplied by the signal generator 112.

The laser light source driver 111 may be a circuit with any configuration capable of modulating the frequency of the laser light outputted by the laser light source 110.

The signal generator 112 outputs a first sine wave and a second sine wave that have the same frequency and are synchronized in phase. The signal generator 112 outputs the first sine wave to the laser light source driver 111. The signal generator 112 outputs the second sine wave to the variable amplifier 113.

The signal generator 112 may be a signal generator with any configuration capable of outputting two sine waves.

The variable amplifier 113 amplifies the amplitude of the second sine wave supplied by the signal generator 112 according to the amplitude of the first sine wave and outputs the second sine wave to the phase shifter 114. The variable amplifier 113 increases the amplitude of the second sine wave when the amplitude of the first sine wave is large and reduces the amplitude of the second sine wave when the amplitude of the first sine wave is small.

The variable amplifier 113 may be a variable amplifier with any configuration capable of amplifying the amplitude of the second sine wave.

The phase shifter 114 delays the phase of the second sine wave supplied from the variable amplifier 113 according to the frequency of the first sine wave and outputs the second sine wave to the optical amplifier driver 115. The phase shifter 114 delays the phase of the second sine wave by a larger amount when the frequency of the first sine wave is large and delays the phase of the second sine wave by a smaller amount when the frequency of the first sine wave is small.

The phase shifter 114 may be a phase shifter with any configuration capable of delaying the phase of the second sine wave.

The optical amplifier driver 115 drives the optical amplifier 116 with the second sine wave delayed by the phase shifter 114 to adjust the amplitude of the frequency-modulated laser light outputted by the laser light source 110 to the optical amplifier 116.

The optical amplifier driver 115 may be a circuit with any configuration capable of adjusting the amplitude of the laser light supplied to the optical amplifier 116.

The optical amplifier 116 adjusts the amplitude of the frequency-modulated laser light outputted by the laser light source 110 so as to cancel an amplitude modulation occurring in the frequency-modulated laser light outputted by the laser light source 110.

The frequency-modulated laser light outputted by the laser light source 110 is now explained. The frequency of the laser light outputted by the laser light source 110 is modulated by the laser light source driver 111, but during the frequency modulation, an unintended amplitude modulation also ends up occurring.

This amplitude modulation is preferably cancelled, since such amplitude modulation is unintentional. If this amplitude modulation is cancelled, the laser light outputted by the laser light source module 11 will be laser light subjected only to frequency modulation, and not amplitude modulation.

By being driven by the optical amplifier driver 115, the optical amplifier 116 can adjust the amplitude of the frequency-modulated laser light outputted by the laser light source 110 so as to cancel the amplitude modulation occurring in the frequency-modulated laser light outputted by the laser light source 110.

In this case, the phase shifter 114 delays the phase of the second sine wave by a predetermined phase more than the phase of the first sine wave so as to cancel the amplitude modulation occurring in the frequency-modulated laser light outputted by the laser light source 110. The amplitude of the frequency-modulated laser light outputted by the laser light source 110 can thereby be modulated with the phase delayed by the predetermined phase more than the phase of the first sine wave. This enables the laser light source module 11 to cancel the amplitude modulation unintentionally occurring in the laser light. The predetermined phase depends on the frequency of the first sine wave. The laser light source module 11 may therefore maintain a table that maps the frequency of the first sine wave to the predetermined phase. The table may be a table created based on actual measurement results of the phase that can cancel the amplitude modulation. Based on the table, the laser light source module 11 may delay the phase of the second sine wave by a predetermined phase more than the phase of the first sine wave.

The frequency-modulated laser light outputted by the laser light source 110 is frequency modulated by a predetermined amount delayed from the phase of the first sine wave. This predetermined amount is set to be larger as the frequency of the first sine wave is larger. Therefore, the phase shifter 114 delays the phase of the second sine wave by a larger amount as the frequency of the first sine wave is larger. The relationship between the frequency of the first sine wave and the predetermined amount may be measured in advance by actual measurement. The phase shifter 114 delays the phase of the second sine wave according to the frequency of the first sine wave based on the measurement made in advance.

The optical amplifier 116 outputs the frequency-modulated laser light to the first optical coupler 12. The laser light outputted by the optical amplifier 116 has the amplitude modulation canceled, i.e., the laser light has only been subjected to frequency modulation.

The first optical coupler 12 splits the laser light supplied from the laser light source module 11 into pump light and reference light. The first optical coupler 12 outputs the pump light to the optical switch 13. The first optical coupler 12 outputs the reference light to the second optical coupler 18.

The optical switch 13 chops the pump light supplied from the first optical coupler 12 to generate pulsed light. The optical switch 13 outputs the pump light, converted into pulsed light, to the delay fiber 14.

The delay fiber 14 delays the pulsed light supplied from the optical switch 13 and outputs the pulsed light to the polarization scrambler 15.

The polarization scrambler 15 changes the polarization state of the pulsed light supplied from the delay fiber 14 to unpolarized light and outputs the pulsed light to the circulator 16.

The circulator 16 causes the pulsed light supplied by the polarization scrambler 15 to be incident on the optical fiber 1, which is the measurement target. Upon the pulsed light being incident on the optical fiber 1, the optical fiber 1 generates Brillouin scattered light. The circulator 16 outputs the Brillouin scattered light incident from the optical fiber 1 to the scattered light amplifier 17.

The scattered light amplifier 17 amplifies the Brillouin scattered light supplied from the circulator 16 and outputs the Brillouin scattered light to the second optical coupler 18. The scattered light amplifier 17 may, for example, be an Erbium Doped Fiber Amplifier (EDFA).

The second optical coupler 18 combines the Brillouin scattered light supplied from the scattered light amplifier 17 and the reference light supplied from the first optical coupler 12 and outputs the combined light to the photodiode 19.

The photodiode 19 receives and performs heterodyne detection on the combined light supplied from the second optical coupler 18. The photodiode 19 converts the received light into an electric signal and outputs the electric signal to the RF signal amplifier 20.

The RF signal amplifier 20 amplifies the electric signal supplied by the photodiode 19 and outputs the electric signal to the frequency analyzer 21.

The frequency analyzer 21 analyzes the frequency of the electric signal provided by the RF signal amplifier 20, i.e., the electric signal corresponding to the light combined by the second optical coupler 18.

The electric signal supplied to the frequency analyzer 21 by the RF signal amplifier 20 contains a Brillouin gain spectrum due to the Brillouin scattered light. The Brillouin gain spectrum includes a frequency component of approximately 11 GHz.

The frequency analyzer 21 measures the Brillouin frequency shift, which is the amount of shift in the peak of the Brillouin gain spectrum.

Since the Brillouin frequency shift exhibits first-order dependence on the temperature and strain of the optical fiber 1, the frequency analyzer 21 can measure the temperature and strain of the optical fiber 1 by measuring the Brillouin frequency shift.

The position at which the characteristics of the optical fiber 1 are measured depends on the frequency of the first sine wave generated by the signal generator 112. For that reason, the optical fiber characteristics measurement apparatus 10 can sweep the measurement position of the optical fiber 1 by sweeping the frequency of the first sine wave generated by the signal generator 112. The optical fiber characteristics measurement apparatus 10 can therefore measure the temperature and strain at each position of the optical fiber 1 by sweeping the frequency of the first sine wave. In other words, the optical fiber characteristics measurement apparatus 10 can measure the distribution of the temperature and strain in the optical fiber 1 by sweeping the frequency of the first sine wave.

The spatial resolution when measuring the characteristics of the optical fiber 1 depends on the amplitude of the first sine wave generated by the signal generator 112. Therefore, the optical fiber characteristics measurement apparatus 10 can adjust the spatial resolution when measuring the characteristics of the optical fiber 1 by adjusting the amplitude of the first sine wave generated by the signal generator 112.

The optical fiber characteristics measurement apparatus 10 according to the embodiment described above can improve measurement accuracy. In greater detail, the laser light source module 11 includes the laser light source 110 that outputs laser light, the laser light source driver 111 that modulates the frequency of the laser light outputted by the laser light source 110, and the optical amplifier 116 that adjusts the amplitude of the frequency-modulated laser light outputted by the laser light source 110 so as to cancel an amplitude modulation occurring in the frequency-modulated laser light outputted by the laser light source 110. This configuration enables the laser light source module 11 to adjust the amplitude using the optical amplifier 116 so as to cancel the amplitude modulation that unintentionally occurs when the laser light source driver 111 modulates the frequency of the laser light. Consequently, the laser light outputted by the laser light source module 11 becomes laser light subjected only to frequency modulation, and not amplitude modulation. Therefore, the optical fiber characteristics measurement apparatus 10 according to an embodiment can cause laser light that is only subjected to frequency modulation to be incident on the optical fiber 1 that is the measurement target and can thus improve the accuracy in measuring the Brillouin frequency shift.

### (Variation)

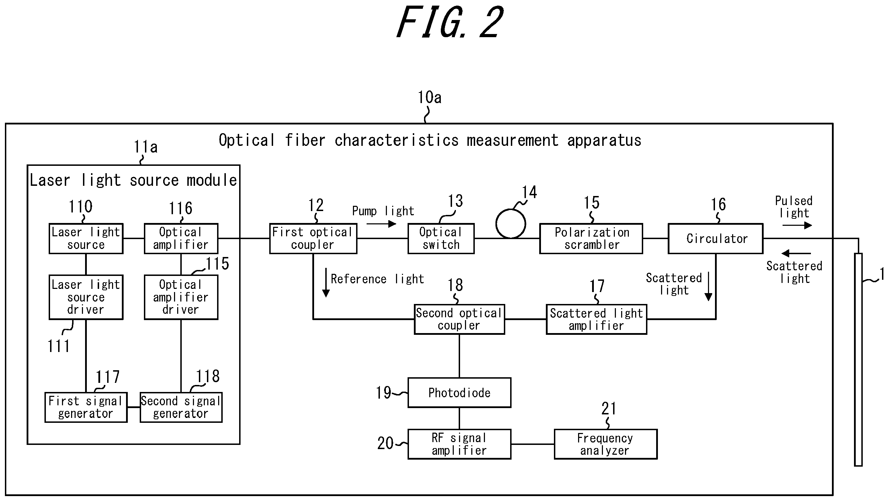

FIG. 2 is a diagram illustrating a schematic configuration of an optical fiber characteristics measurement apparatus 10a according to a variation. The optical fiber characteristics measurement apparatus 10a according to the variation is described with reference to FIG. 2.

The optical fiber characteristics measurement apparatus 10a according to the variation includes a laser light source module 11a, a first optical coupler 12, an optical switch 13, a delay fiber 14, a polarization scrambler 15, a circulator 16, a scattered light amplifier 17, a second optical coupler 18, a photodiode 19, an RF signal amplifier 20, and a frequency analyzer 21.

The laser light source module 11a of the optical fiber characteristics measurement apparatus 10a according to the variation includes a laser light source 110, a laser light source driver 111, an optical amplifier driver 115, an optical amplifier 116, a first signal generator 117, and a second signal generator 118.

The optical fiber characteristics measurement apparatus 10a according to the variation differs from the optical fiber characteristics measurement apparatus 10 illustrated in FIG. 1 in that the laser light source module 11a includes the first signal generator 117 and the second signal generator 118 as two separate signal generators. The laser light source module 11 of the optical fiber characteristics measurement apparatus 10 illustrated in FIG. 1 has only one signal generator 112.

The optical fiber characteristics measurement apparatus 10a according to the variation will be described mainly with respect to points that differ from the optical fiber characteristics measurement apparatus 10 illustrated in FIG. 1, with a description of points common or similar to the optical fiber characteristics measurement apparatus 10 illustrated in FIG. 1 being omitted as appropriate.

The first signal generator 117 outputs the first sine wave to the laser light source driver 111. The laser light source driver 111 uses the first sine wave supplied from the first signal generator 117 to modulate the frequency of the laser light outputted by the laser light source 110.

The second signal generator 118 outputs the second sine wave to the optical amplifier driver 115. The frequency of the second sine wave is equal to the frequency of the first sine wave.

The second signal generator 118 delays the phase of the second sine wave according to the frequency of the first sine wave. The second signal generator 118 delays the phase of the second sine wave by a larger amount when the frequency of the first sine wave is large and delays the phase of the second sine wave by a smaller amount when the frequency of the first sine wave is small.

The second signal generator 118 amplifies the amplitude of the second sine wave according to the amplitude of the first sine wave. The second signal generator 118 increases the amplitude of the second sine wave when the amplitude of the first sine wave is large and reduces the amplitude of the second sine wave when the amplitude of the first sine wave is small.

The optical amplifier driver 115 drives the optical amplifier 116 with the second sine wave supplied from the second signal generator 118 to adjust the amplitude of the frequency-modulated laser light outputted by the laser light source 110 to the optical amplifier 116.

The optical amplifier 116 adjusts the amplitude of the frequency-modulated laser light outputted by the laser light source 110 so as to cancel an amplitude modulation occurring in the frequency-modulated laser light outputted by the laser light source 110.

In the optical fiber characteristics measurement apparatus 10a according to the variation as well, the laser light source module 11 a can adjust the amplitude using the optical amplifier 116 so as to cancel the amplitude modulation that unintentionally occurs when the laser light source driver 111 modulates the frequency of the laser light. Therefore, the optical fiber characteristics measurement apparatus 10a according to the variation can also cause laser light that is only subjected to frequency modulation to be incident on the optical fiber 1 that is the measurement target and can thus improve the accuracy in measuring the Brillouin frequency shift.

### (Comparative Example)

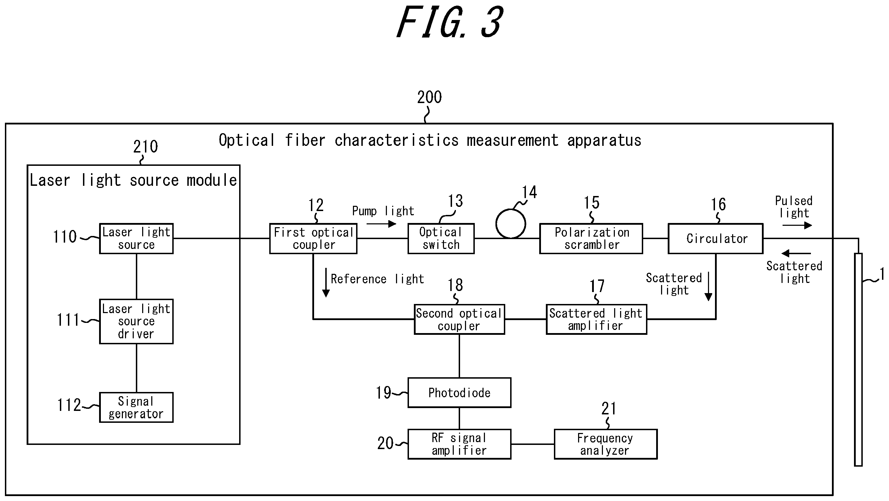

FIG. 3 is a diagram illustrating a schematic configuration of an optical fiber characteristics measurement apparatus 200 according to a comparative example. The optical fiber characteristics measurement apparatus 200 according to the comparative example is described with reference to FIG. 3.

A laser light source module 210 of the optical fiber characteristics measurement apparatus 200 according to the comparative example includes a laser light source 110, a laser light source driver 111, and a signal generator 112.

In other words, the laser light source module 210 of the optical fiber characteristics measurement apparatus 200 according to the comparative example differs significantly from the laser light source module 11 of the optical fiber characteristics measurement apparatus 10 illustrated in FIG. 1 by not including the optical amplifier 116.

In the laser light source module 210 of the optical fiber characteristics measurement apparatus 200 according to the comparative example, the frequency of the laser light outputted by the laser light source 110 is modulated by the laser light source driver 111, and the frequency-modulated laser light is outputted as is to the first optical coupler 12.

Therefore, the laser light that was also unintentionally subjected to amplitude modulation during frequency modulation is outputted as is to the first optical coupler 12. Since this amplitude modulation becomes noise, the measurement accuracy of the optical fiber characteristics measurement apparatus 200 according to the comparative example is degraded in proportion to the noise caused by the amplitude modulation.

It will be clear to a person of ordinary skill in the art that the present disclosure may be implemented in certain ways other than the above embodiments without departing from the spirit or essential features thereof. Accordingly, the above explanation merely provides examples that are in no way limiting. The scope of the present disclosure is to be defined by the appended claims, not by the above explanation. Among all changes, various changes that are within the range of equivalents are included therein.

For example, the arrangement, number, and the like of the above-described components are not limited to the above explanation or the drawings. The arrangement, number, and the like of each component may be selected freely as long as the functions of the component can be achieved.

For example, the optical fiber characteristics measurement apparatus 10 and the optical fiber characteristics measurement apparatus 10a have been described as measuring the characteristics of the optical fiber using BOCDR, but the optical fiber characteristics measurement apparatus 10 and the optical fiber characteristics measurement apparatus 10a may measure the characteristics of the optical fiber using Brillouin Optical Correlation Domain Analysis (BOCDA).

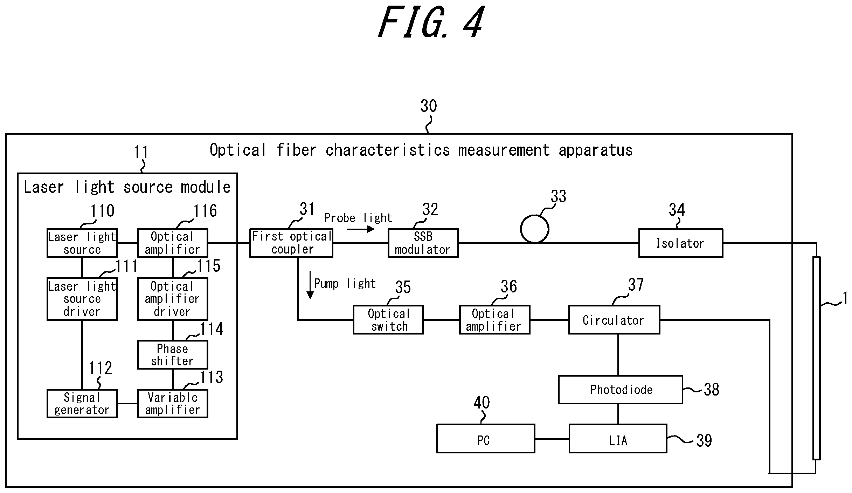

FIG. 4 illustrates an example of a schematic configuration of an optical fiber characteristics measurement apparatus 30 in the case of BOCDA. The optical fiber characteristics measurement apparatus 30 includes a laser light source module 11, a first optical coupler 31, an SSB modulator 32, a delay fiber 33, an isolator 34, an optical switch 35, an optical amplifier 36, a circulator 37, a photodiode 38, an LIA 39, and a personal computer (PC) 40. The laser light source module 11 is the same as the laser light source module 11 illustrated in FIG. 1. The optical fiber characteristics measurement apparatus 30 illustrated in FIG. 4 may include the laser light source module 11 a illustrated in FIG. 2 instead of the laser light source module 11. The first optical coupler 31 splits the laser light supplied from the laser light source module 11 into pump light and strobe light. The circulator 37 extracts scattered light and the probe light from the optical fiber 1, the scattered light being generated upon the pump light being incident on the optical fiber 1 that is the measurement target.

As another example, the optical fiber characteristics measurement apparatus 10 and the optical fiber characteristics measurement apparatus 10a have been described as measuring the characteristics of the optical fiber using BOCDR, but the optical fiber characteristics measurement apparatus 10 and the optical fiber characteristics measurement apparatus 10a may measure the characteristics of the optical fiber by optical correlation domain reflectometry (OCDR) that measures Rayleigh scattering. When measuring the characteristics of the optical fiber by OCDR, an acousto-optic modulator may be inserted on the reference light or pump light side to perform heterodyne measurement.

For example, in the above embodiment, the optical fiber characteristics measurement apparatus 10 and optical fiber characteristics measurement apparatus 10a have been described as performing heterodyne detection, but the optical fiber characteristics measurement apparatus 10 and optical fiber characteristics measurement apparatus 10a may perform homodyne detection. In the case of performing homodyne detection, the optical fiber characteristics measurement apparatus 10 and the optical fiber characteristics measurement apparatus 10a may include a Single Side-Band (SSB) modulator between the first optical coupler 12 and the second optical coupler 18. Alternatively, the optical fiber characteristics measurement apparatus 10 and the optical fiber characteristics measurement apparatus 10a may include an SSB modulator between the first optical coupler 12 and the optical switch 13.

For example, in the above embodiment, the optical fiber characteristics measurement apparatus 10 and optical fiber characteristics measurement apparatus 10a have been described as measuring the Brillouin frequency shift, but this configuration is not limiting. The optical fiber characteristics measurement apparatus 10 and the optical fiber characteristics measurement apparatus 10a may detect a doubled wave component, which has a frequency that is twice the modulation frequency of the modulated light included in the intensity component of each frequency of the Brillouin gain spectrum, and may measure the characteristics of the optical fiber 1 based on the detected doubled wave component. In this case, the optical fiber characteristics measurement apparatus 10 and optical fiber characteristics measurement apparatus 10a may perform either heterodyne detection or homodyne detection.

For example, the amount of amplification by the variable amplifier 113 of the optical fiber characteristics measurement apparatus 10 illustrated in FIG. 1 may be manually adjustable. The amount by which the phase shifter 114 of the optical fiber characteristics measurement apparatus 10 illustrated in FIG. 1 delays the phase may also be manually adjustable.

## Claims

1. An optical fiber characteristics measurement apparatus for measuring characteristics of an optical fiber, the optical fiber characteristics measurement apparatus comprising:
a laser light source module configured to output frequency-modulated laser light, wherein
the laser light source module comprises
a laser light source configured to output laser light,
a laser light source driver configured to modulate a frequency of the laser light outputted by the laser light source, and
an optical amplifier configured to adjust an amplitude of the frequency-modulated laser light outputted by the laser light source so as to cancel an amplitude modulation occurring in the frequency-modulated laser light outputted by the laser light source.

2. The optical fiber characteristics measurement apparatus according to claim 1, wherein
the laser light source module further comprises
a signal generator configured to generate a first sine wave used when the laser light source driver modulates the frequency of the laser light outputted by the laser light source and a second sine wave having a frequency equal to a frequency of the first sine wave,
a phase shifter configured to delay a phase of the second sine wave according to the frequency of the first sine wave, and
an optical amplifier driver configured to drive the optical amplifier with the second sine wave delayed by the phase shifter to adjust an amplitude of the frequency-modulated laser light outputted by the laser light source.

3. The optical fiber characteristics measurement apparatus according to claim 2, wherein the laser light source module further comprises a variable amplifier configured to amplify an amplitude of the second sine wave according to an amplitude of the first sine wave and output the second sine wave to the phase shifter.

4. The optical fiber characteristics measurement apparatus according to claim 1, wherein
the laser light source module further comprises
a first signal generator configured to generate a first sine wave used when the laser light source driver modulates the frequency of the laser light outputted by the laser light source,
a second signal generator configured to generate a second sine wave that has a frequency equal to a frequency of the first sine wave and is delayed according to the frequency of the first sine wave, and
an optical amplifier driver configured to drive the optical amplifier with the second sine wave to adjust an amplitude of the frequency-modulated laser light outputted by the laser light source.

5. The optical fiber characteristics measurement apparatus according to claim 4, wherein an amplitude of the second sine wave generated by the second signal generator is amplified according to an amplitude of the first sine wave.

6. The optical fiber characteristics measurement apparatus according to claim 1, wherein
the optical fiber characteristics measurement apparatus is configured to measure the characteristics of the optical fiber using Brillouin optical correlation domain reflectometry, and
the optical fiber characteristics measurement apparatus further comprises
a first optical coupler configured to split the frequency-modulated laser light into a pump light and a reference light, and
a second optical coupler configured to combine scattered light from the optical fiber with the reference light, the scattered light being generated upon the pump light being incident on the optical fiber that is a measurement target.

7. The optical fiber characteristics measurement apparatus according to claim 1, wherein
the optical fiber characteristics measurement apparatus is configured to measure the characteristics of the optical fiber using Brillouin optical correlation domain analysis, and
the optical fiber characteristics measurement apparatus further comprises
a first optical coupler configured to split the frequency-modulated laser light into a pump light and a probe light, and
a circulator configured to extract scattered light and the probe light from the optical fiber, the scattered light being generated upon the pump light being incident on the optical fiber that is a measurement target.
